(19) **Europäisches Patentamt**

**European Patent Office**

**Office européen des brevets**

(11) **EP 0 857 178 B1**

(12) **EUROPEAN PATENT SPECIFICATION**

(45) Date of publication and mention
of the grant of the patent:
**19.12.2001 Bulletin 2001/51**

(51) Int Cl.⁷: **C08B 31/00**, C08B 31/18,
D21H 17/29

(21) Application number: **96935683.1**

(22) Date of filing: **09.10.1996**

(86) International application number:
**PCT/SE96/01278**

(87) International publication number:
**WO 97/13789 (17.04.1997 Gazette 1997/17)**

(54) **MODIFIED STARCH AND COATING SLIP COMPRISING THE SAME**

MODIFIZIERTE STÄRKE UND DIESE ENTHALTENDE STREICHMASSE

AMIDON MODIFIE ET SAUCE DE COUCHAGE CONTENANT CELUI-CI

(84) Designated Contracting States:
**AT DE FI FR GB IT NL SE**

(30) Priority: **11.10.1995  SE 9503528**

(43) Date of publication of application:
**12.08.1998  Bulletin 1998/33**

(73) Proprietor: **SVERIGES
STÄRKELSEPRODUCENTER, FÖRENING UPA
374 22 Karlshamn (SE)**

(72) Inventors:
• **JÄRNSTRÖM, Lars
S-741 92 Kvista (SE)**
• **WIKSTRÖM, Olle
S-291 53 Kristianstad (SE)**

(74) Representative: **Wiklund, Erik et al
AWAPATENT AB, Box 5117
200 71 Malmö (SE)**

(56) References cited:
**EP-A- 0 542 236          WO-A-95/18157
US-A- 4 146 515**

## EP 0 857 178 B1

**Description**

The present invention relates to a modified starch and a coating slip comprising the same.

In the manufacture of paper and cardboard, the paper web is treated by, inter alia, a coating slip being applied to make the paper surface more even and dense and to achieve a higher quality in the printing process. Such coating slips contain pigments, such as clay, chalk or titanium dioxide, in a binder system which contains binding and thickening agents in the form of e.g. starch or a polymer latex, optionally in combination with each other. The binder content is usually 5-40, preferably 5-20 parts by weight of binder per 100 parts by weight of pigment. For dispersing the pigment, preferably also a dispersing agent in an amount of 0.03-1 parts by weight per 100 parts by weight of pigment is included. In addition, the coating slip may comprise a number of further additives, such as optical whitening agent, wet-strength agent, viscosity-controlling agent or colourants. The content of these additives normally amounts to 5 parts by weight at most per 100 parts by weight of pigment.

All coating slips must have such rheological properties as to be manageable under the existing conditions of use, which means anything from pumping at low shearing rates to application to the paper web at very high shearing rates at a coating station. At the same time the coating slip should be such as to permit optimum results when printing the coated paper. This places high demands in respect of, inter alia, the covering of the surface and the porosity provided by the coating slip when it has been applied to the surface of the paper, and has been immobilised and dried.

The above-mentioned criteria of coating slips are to some extent contradictory, and one drawback of coating slips known up to now is that if a coating slip is produced with a binder system which results in a well-covering and porous coating layer, the rheological properties may be deteriorated to such an extent that it will be difficult to apply the coating slip to the paper web. In general, there is a connection between a high porosity of the coating layer and deteriorated mechanical properties, i.e. low tensile stress at break and low tensile energy at break. The desire to obtain high porosity may cause formation of dust in the finishing process and deteriorated printing quality.

WO95/18157 discloses the production of cationic starch, the cationising chemical being, for instance, 2,3-epoxypropylene trimethylammonium chloride or 3-chloro-2-hydroxypropylene trimethylammonium chloride. The cationic starch contains no hydrophobic groups.

EP 0 542 236 discloses the manufacture of cationic starch derivatives starting from different types of starch and using different reagents. As examples of suitable starches, mention is made of unmodified starch, acid-modified starch, dextrinised starch, hydrolysed starch, oxidised starch, and derivatised starch, such as, for example, starch ethers and starch esters that still retain reactive sites. As cationising reagents, a number of different cationising reagents are enumerated, with and without hydrophobic groups. As examples of applications, mention is made of dewatering of a cellulose suspension, and retention of the filling agent added to this suspension, in papermaking. Modified starch containing fixed contents of both carboxyl groups and cationic, hydrophobic groups or use of such a modified starch for coating of paper is not disclosed.

US 4,373,099 and US 4,146,515 further disclose oxidised starch, which is cationised with conventional cationising reagents without hydrophobic groups.

An object of the present invention is to provide, by using a special, modified starch, a coating slip which decreases or eliminates the drawbacks of prior-art coating slips.

The object of the invention is achieved by a modified cationic starch which contains both carboxyl groups and hydrophobic groups and which in aqueous solution has phase separation.

More specifically, the invention provides a modified starch, which is characterised in that it has a degree of substitution concerning carboxyl groups of 0.005-0.070, a degree of substitution concerning cationic, hydrophobic groups, which contain a hydrocarbon chain having 7-20 carbon atoms, of 0.008-0.080, and that an aqueous solution of the modified starch has phase separation in the range 0-100°C.

According to the invention, a coating slip is also provided, which is characterised in that it contains the above-defined, modified starch.

Further features and advantages of the invention are apparent from the following specification and the accompanying claims.

The types of starch that are normally used in coating slips are chemically degraded (oxidised) starches or chemically stabilised (hydroxy-propylated)/chemically degraded (oxidised) starches. Also chemically degraded/ cationised starches are used. In contrast thereto, the inventive starch is modified, on the one hand by being chemically degraded (oxidised) so as to contain carboxyl groups and, on the other hand, by containing cationic, hydrophobic groups. The starch used as raw material for the modified starch according to the invention can be of any known origin whatever, such as starch from potato, maize, wheat and tapioca.

Carboxyl groups are introduced into the starch according to the invention in conventional manner by oxidation with e.g. sodium hypochlorite or hydrogen peroxide. The degree of substitution in respect of carboxyl groups is according to the invention 0.005-0.070, preferably 0.010-0.050. The oxidised starch is suitably prepared in the following manner. Potato starch is suspended in water to a dry content of about 45%. The pH of the suspension is adjusted with sodium hydroxide to a pH of 9.5. Sodium hypochlorite having an active substance of 150 g/l available chlorine is added slowly. The pH of the reaction mixture is kept constant at 9.5 by adding sodium hydroxide. When the reaction is completed, i.e. when all chlorine is consumed, the reaction is interrupted by neutralisation to a pH of 5.5 with hydrochloric acid, whereupon the product is dewatered and washed before drying. Through this reaction, carboxyl groups are introduced on the starch molecule. The amount of carboxyl groups, i.e. the degree of substitution (DS), is controlled by the amount of added hypochlorite and at which pH the reaction is carried out. For further details, reference is made to an article by von J. Potze and P. Hienstra, "Über den Einfluss der Reaktionsbedingungen auf die Oxydation der Kartoffelstärke mit Hypoklorit", Die Stärke, No. 6/1963, pp 217-225.

In addition to the introduction of carboxyl groups, the starch according to the invention is modified by introduction of cationic hydrophobic groups. The degree of substitution in respect of cationic hydrophobic groups is 0.008-0.080, preferably 0.010-0.030. To obtain the desired hydrophobicity, the hydrophobic groups contain a hydrocarbon chain having 7-20 carbon atoms, preferably 10-16 carbon atoms. To make the hydrophobic groups cationic, they contain a positively charged atom or group, such as a quaternary nitrogen atom. According to the invention, it is preferred that the positively charged atom or group is bound to, or constitutes part of the hydrophobic group, but the invention does not exclude that the starch is modified with separate hydrophobic groups and cationic groups. In such a separate modification, the degree of substitution in respect of the cationic groups should preferably conform with that of the hydrophobic groups.

Modification of the starch by introduction of cationic, hydrophobic groups can take place, for instance by reacting the starch with the chlorohydrin of a quaternary ammonium compound, which contains a hydrophobic hydrocarbon chain as above, for instance, the compound 3-chloro-2-hydroxypropyl dimethyl dodecylammonium chloride. The introduction of cationic, hydrophobic groups can suitably take place in the following manner. Potato starch is suspended in water to a dry content of about 45%. The pH of the suspension is adjusted with sodium hydroxide to 11.4, whereupon the cationising reagent is added. During the reaction, the pH is kept constant at 11.4 by adding sodium hydroxide. After 24 h, total nitrogen and bound nitrogen are measured to determine the yield of the reaction. If the bound nitrogen amounts to the desired value, the reaction is interrupted by adjusting the pH to 5.5 with hydrochloric acid. The product is washed, dewatered and dried.

If a starch is modified in this manner by introduction of carboxyl groups and cationic, hydrophobic groups and the degree of substitution in respect of these groups as well as the size of the hydrophobic group are selected in a suitable manner within the above-mentioned ranges, a modified starch is obtained, which after dissolution in water, for instance by boiling in a jet boiler, phase-separates (precipitates) as the temperature is decreased. It is the amylose fraction or amylopectin fraction of the starch or both fractions at the same time which phase-separate. This phase separation, which is a distinguishing feature of the modified starch according to the invention, takes place at a certain so-called upper critical solution temperature (UCST). When the temperature is raised above the UCST, the modified starch is dissolved, whereas, when the temperature is lowered below the UCST, the starch phase-separates (precipitates). This phase-separation is reversible. The UCST, i.e. the temperature at which phase separation takes place, lies for the modified starch according to the invention in the range 0-100°C, preferably 30-60°C, most preferred about 50°C. The reversible phase separation of the modified starch according to the invention causes the viscosity of the phase-separated starch solution at temperatures below the UCST to be lower than the viscosity of the starch solution at temperatures above the UCST. This phenomenon is utilised in the invention to provide a coating slip having unique and advantageous properties. If in fact the modified starch according to the invention is added to a coating pigment dispersion, the viscosity of the obtained coating slip at temperatures below the USCT of the starch will be lower than at temperatures above the same. This means that the coating strip after manufacture can be stored, pumped and applied to the paper web without any problems at temperatures below the USCT of the starch, at the same time as drying of the coated paper in the drying section at temperatures above the UCST of the starch results in the starch again being dissolved and its hydrophobic and cationic groups being available to form a structure. As a result, a well-covering coating slip having a, relatively seen, high porosity is obtained.

The inventive starch is intended to be used in a coating slip alone or together with a dispersion binder of the polymer latex type.

When the modified starch is included in a coating slip together with a latex binder, there will be obtained, after drying above the UCST, a coating layer having a higher porosity, compared with the condition that the modified starch had been replaced by a conventional, oxidised starch. The tensile stress at break and tensile energy at break for the layers containing the modified starch will not be lower than for the layers containing the conventional starch. This can be explained by the interaction between starch and latex/pigment caused by the cationic, hydrophobic groups.

In order to further improve the understanding of the invention, it will be elucidated by means of non-restricting Examples All parts in the Examples concern weight, unless otherwise stated.

EXAMPLE 1

A coating slip consisting of 100 parts of kaolin clay dispersed with 0.3 parts of a polyacrylate dispersing agent and 12 parts of modified starch according to the invention was prepared. The kaolin clay was of coating quality and supplied by Speswhite®, English China Clay International, Ltd., Cornwall, England. The dispersing agent was a low-molecular sodium polyacrylate under the trade name Dispex N40 supplied by Allied Colloids, Ltd., Bradford, England. The modified starch according to the invention was a potato starch which had been oxidised with sodium hypochlorite to a degree of substitution (DS) of 0.020. Besides, the starch was modified by introduction of cationic, hydrophobic groups. This modification was effected by reacting the potato starch with 3-chloro-2-hydroxypropyl dimethyl dodecyl ammonium chloride. The degree of substitution (DS) of the modified starch in respect of cationic, hydrophobic groups was 0.021. The modified starch was boiled in a jet boiler at 140°C. The boiled starch had a UCST of about 50°C. The starch was added to the dispersed kaolin clay for preparing the coating slip of the above composition.

Since the modified starch in the coating slip had a UCST of about 50°C, the plastic viscosity of the coating slip (measured at 25°C) was higher if the coating slip was prepared and stored at 55-60°C (312 mPas) than if the coating slip was prepared and stored at room temperature (223 mPas). At room temperature, the starch phase-separated, and therefore its effect on the viscosity of the coating slip was smaller than if no phase separation had taken place.

Coating slips prepared as described above at 23°C and 55-60°C, respectively, were applied to a web and dried at 23°C and 105°C, whereupon the properties of the coating layer were measured. The obtained results are stated in Table 1.

Table 1

| Temp. in prep. of slip °C | Temp. in drying °C | Dry content (% by weight) | Density (kg/dm$^3$) | Porosity (%) |
|---|---|---|---|---|
| 23 | 23 | 52.8 | 1.66 | 32.3 |
| 23 | 105 | 52.8 | 1.46 | 40.7 |
| 55-60 | 23 | 54.2 | 1.47 | 40.3 |
| 55-60 | 105 | 54.2 | 1.26 | 51.3 |

Porosity values of 40% and above are to be considered high. As is evident from Table 1, the highest porosity is obtained if the coating slip is prepared at a temperature above the UCST of the starch and if the applied coating layer is dried at 105°C. This phenomenon can be explained by bridging via adsorption.

EXAMPLE 2

Two coating slips consisting of 100 parts of kaolin clay dispersed with 0.3 parts of a polyacrylate dispersing agent, 6 parts of carboxylated styrene-butadiene latex and 6 parts of starch were prepared. The latex had the trade name DL 935 and was a coating quality supplied by Dow Sverige AB, Norrköping, Sweden. The kaolin clay and the dispersing agent were identical with the qualities described in Example 1. For the one coating slip, use was made of a merely oxidised potato starch which had been oxidised with sodium hypochlorite to a degree of substitution (DS) of 0.034. This starch was used as an example of a conventional, oxidised starch and it was boiled in a jet boiler at 120°C. The slip containing this starch was designated "Slip A". For the other coating slip, use was made of starch that had been oxidised to a degree of substitution of 0.020 and besides was modified by introduction of cationic hydrophobic groups to a DS of 0.021. This starch is identical with the starch described under Example 1. This starch was boiled in a jet boiler at 140°C. The slip containing this starch was designated "Slip B". The coating slips were prepared by adding first the starch and then the latex to the dispersed kaolin clay. The temperature of the starch solution was 70°C when it was mixed with the kaolin suspension.

It was established that the starch included in Slip B had a UCST of about 50°C. This phenomenon was utilised during the preparation of the coating slip. The cationic groups will, at temperatures above the UCST, produce a structure in the wet coating slip which increases the porosity of the dry coating layer. The dry content of the coating layers was 57.1%. Since the starch used for the preparation of Slip A had no cationic groups, Slip A had a lower plastic viscosity at 25°C (50 mPas) than Slip B (119 mPas). Thanks to the existence of the UCST, the plastic viscosity of Slip B is considerably lower than if a quaternary ammonium starch ether without UCST should have been used instead. If thus the starch in Slip A is replaced with a starch that is oxidised to a DS = 0.020 and modified with 3-chloro-2-hydroxypropyl trimethylammonium chloride to a DS = 0.007, a coating slip having a plastic viscosity at 25°C of 200 mPas will be obtained. This result is remarkable, especially in view of the fact that the plastic viscosity normally increases as the DS increases.

The coating Slips A and B., which were prepared as described above, were applied to a paper web at 23°C and dried at 23°C, whereupon the properties of the coating layer were measured. The mechanical properties were measured at 23°C and 50% relative humidity in tensile testing equipment (Alwetron® TH1, Lorentzen & Wettre, Stockholm, Sweden). In these tests, the rate of tension was 10 mm/ min. and the clamping length 100 mm. The obtained results are shown in Table 2.

The tensile energy at break of the layers is given as tensile energy absorption index (TEA*), defined as follows

$$TEA^* \quad = \quad \frac{1}{\omega} \int_0^{\varepsilon_t} F d\varepsilon$$

where $\omega$ is the surface weight, F is the tensile force per width, $\varepsilon$ is the elongation and $\varepsilon_t$ is elongation at break.

Table 2

| Type of slip | Slip dry content (% by weight) | Density (kg/dm$^3$) | Porosity (%) | Tensile strength at break (MPa) | Tensile energy absorption index (J/kg) |
|---|---|---|---|---|---|
| Slip A | 57.1 | 1.78 | 24.5 | 11.5±2.2 | 3.2±1.2 |
| Slip B | 57.1 | 1.73 | 26.7 | 13.4±1.9 | 4.5±1.9 |

Table 2 shows that a higher porosity was obtained by using the modified starch according to the invention, compared with that obtained by using a conventional, oxidised starch. Table 2 also shows that the mechanical properties of the coating layer were improved by using the modified starch according to the invention.

EXAMPLE 3

Aqueous solutions of three different modified potato starches, all oxidised with sodium hypochlorite, were prepared by boiling in a jet boiler. Of the starches, only one was oxidised (designated S-I), while the two other starches were both oxidised and modified with cationic, hydrophobic groups according to the invention (designated S-II and S-III). The degree of substitution (DS) for the three starches is stated in Table 3. Starch S-III was reacted with 3-chloro-2-hydroxypropyl dimethyl dodecyl ammonium-chloride to a DS within the range stipulated according to the invention. Starch S-II was reacted with the same reagent, but to a lower DS than stipulated according to the invention. Starch S-I was boiled at 120°C, while Starches S-II and S-III were boiled at 140°C.

Table 3

| Designation | Starch quality | Carboxyl groups, DS | Cationic hydrophobic groups, DS |
|---|---|---|---|
| S-I | Conventional oxidised | 0.03 | 0 |
| S-II | Modified with the same reagent as the invention | 0.02 | 0.004 |
| S-III | Modified according to the invention | 0.02 | 0.21 |

The jet-boiled starches were examined immediately after boiling without dilution as well as diluted to a 5% by weight solution. Without dilution, the starch concentration was about 20%. Only starch S-III had a sudden phase separation as the temperature decreased below a certain so-called upper critical solution temperature (UCST) in the range 0-100°C. The phase separation observed for starch S-III was reversible and took place at 50°C.

This Example demonstrates that a UCST in the temperature range 0-100°C does not appear in solutions of a conventional oxidised starch. This example also demonstrates that the existence of a UCST in the temperature range 0-100°C is not the general case for a starch that was allowed to react with a 3-chloro-2-hydroxypropyl dimethyl dodecyl ammonium chloride. The starch must have a DS within the limits stipulated according to the invention in order to have a UCST in the temperature range 0-100°C.

**Claims**

**1.** A modified starch, **characterised in that** it has a degree of substitution concerning carboxyl groups of 0.005-0.070, and a degree of substitution concerning cationic, hydrophobic groups, which contain a hydrocarbon chain having 7-20 carbon atoms, of 0.008-0.080.

2. The modified starch as claimed in claim 1, **characterised in that** it has a degree of substitution concerning carboxyl groups of 0.010-0.050.

3. The modified starch as claimed in claim 1 or 2, **characterised in that** it has a degree of substitution concerning cationic, hydrophobic groups of 0.010-0.030.

4. The modified starch as claimed in any of claims 1-3, **characterised in that** the hydrophobic groups contain a hydrocarbon chain having 10-16 carbon atoms.

5. A coating slip, **characterised in that** it comprises a modified starch according to claim 1.

**Patentansprüche**

1. Modifizierte Stärke, **dadurch gekennzeichnet, dass** sie einen Substitutionsgrad betreffend Carboxylgruppen von 0,005-0,070 und einen Substitutionsgrad betreffend kationische hydrophobe Gruppen, welche eine Kohlenwasserstoffkette mit 7-20 Kohlenstoffatomen enthalten, von 0,008-0,080 aufweist.

2. Modifizierte Stärke wie in Anspruch 1 beansprucht, **dadurch gekennzeichnet, dass** sie einen Substitutionsgrad betreffend Carboxylgruppen von 0,010-0,050 aufweist.

3. Modifizierte Stärke wie in Anspruch 1 oder 2 beansprucht, **dadurch gekennzeichnet, dass** sie einen Substitutionsgrad betreffend kationische hydrophobe Gruppen von 0,010-0,030 aufweist.

4. Modifizierte Stärke wie in einem der Ansprüche 1-3 beansprucht, **dadurch gekennzeichnet, dass** die hydrophoben Gruppen eine Kohlenwasserstoffkette mit 10-16 Kohlenstoffatomen enthalten.

5. Streichmasse, **dadurch gekennzeichnet, dass** sie eine modifizierte Stärke nach Anspruch 1 umfasst.

**Revendications**

1. Amidon modifié, **caractérisé en ce qu'**il a un degré de substitution concernant les groupes carboxyle de 0,005 - 0,070, et un degré de substitution concernant les groupes cationiques, hydrophobes, qui contiennent une chaîne hydrocarbonée ayant 7 - 20 atomes de carbone, de 0,008-0,080.

2. Amidon modifié tel que revendiqué dans la revendication 1, **caractérisé en ce qu'**il a un degré de substitution concernant les groupes carboxyle de 0,010-0,050.

3. Amidon modifié tel que revendiqué dans la revendication 1 ou 2, **caractérisé en ce qu'**il a un degré de substitution concernant les groupes cationiques, hydrophobes de 0,010 - 0,030.

4. Amidon modifié tel que revendiqué dans l'une quelconque des revendications 1 - 3, **caractérisé en ce que** les groupes hydrophobes contiennent une chaîne hydrocarbonée ayant 10 - 16 atomes de carbone.

5. Sauce de couchage, **caractérisée en ce qu'**elle comprend un amidon modifié selon la revendication 1.